# EUROPEAN PATENT APPLICATION

(11) **EP 4 632 885 A1**
(43) Date of publication of application: **15.10.2025**
(21) Application number: 24222931.8
(22) Date of filing: 23.12.2024
(51) Int. Cl.: H01M 50/109, H01M 50/153, H01M 50/342

(54) **BUTTON CELL**

(30) Priority: 09.04.2024 KR 20240048178
(71) Applicant: SAMSUNG SDI CO., LTD., Yongin-si, Gyeonggi-do 17084 (KR)
(72) Inventor: Kim, Dae-Sup, 17084 Yongin-si, Gyeonggi-do (KR)
(74) Representative: Gulde & Partner

(57) **Abstract**

According to the invention, a button cell (100) comprises an electrode assembly (100), a case (200), a cap plate (300) and a terminal plate (400), wherein, in order to evacuate cases building within the button cell (1000), the terminal plate (400) comprises with a vent portion (430).

## Description

### FIELD

The present invention relates to a button cell.

### BACKGROUND

In general, a rechargeable battery (or a secondary battery) is a battery that may be charged and discharged.

As a demand for a wearable device such as a headphone, an earphone, a smartwatch, a body-attached medical device, or the like using wireless communication such as Bluetooth or the like has recently increased, a need for a button cell that is an ultra-small rechargeable battery installed at the wearable device is increasing.

Such a conventional button cell includes an electrode assembly including two electrodes, a case accommodating the electrode assembly and connected to one electrode of the electrode assembly, a cap plate coupled to the case to have the same polarity as that of the one electrode, and a terminal plate that is insulated from the cap plate and is bonded to the cap plate to be connected to the other electrode of the electrode assembly.

However, the conventional button cell has a problem in which a pressure inside the case increases such that the button cell explodes if a gas is generated inside the case due to a short circuit or the like in the electrode assembly.

### SUMMARY

Embodiments are to provide a button cell that easily discharges a gas generated inside a case.

A button cell according to embodiments of the present disclosure includes: an electrode assembly that includes a first electrode, a second electrode, and a separator disposed between the first electrode and the second electrode; a case that is connected to the first electrode to accommodate the electrode assembly and includes an opening exposing the electrode assembly; a cap plate that is coupled to the case to cover an outer region of the opening and includes a through-hole exposing a central region of the opening; and a terminal plate that is connected to the second electrode to be insulated from the cap plate and covers the through-hole. The terminal plate includes a vent portion recessed from a rear surface of the terminal plate facing the through-hole.

The terminal plate may further include: a flange portion that covers the through-hole; and a protruding portion that is connected to the flange portion.

The vent portion may be disposed between the flange portion and the protruding portion.

The vent portion may be recessed from a rear surface of the flange portion.

The vent portion may include a plurality of vent parts.

The plurality of vent parts may be spaced apart from one another on the rear surface of the flange portion along an edge of the protruding portion.

The electrode assembly may further include: a first electrode tab that extends from the first electrode to be welded to the case; and a second electrode tab that extends from the second electrode to be welded to a protruding portion of the terminal plate.

The button cell may further include a bonding layer that is disposed between the cap plate and the flange portion of the terminal plate and insulates the cap plate from the flange portion and bonds the cap plate to the flange portion.

The vent portion may not overlap the bonding layer in a thickness direction of the button cell.

The bonding layer may expose the vent portion.

A thickness of the vent portion may be less than that of the terminal plate.

A thickness of the vent portion may be 30% to 70% of a thickness of the terminal plate. For example, the thickness of the vent portion may be higher than 30 %, up to 40 %, up to 50 %, up to 60 % or up to 70 % of a thickness of the terminal plate. The terminal plate may be thicker than the vent portion, for example by a factor of more than 3, more than 2,5, more than 2, more than 1,6 or more than 1,4.

The vent portion may directly face an internal space of the case through the through-hole.

The vent portion may be recessed in a linear shape.

The vent portion may extend from the rear surface of the terminal plate toward a center of the terminal plate.

The vent portion may extend from the rear surface of the terminal plate toward an edge of the terminal plate.

The vent portion may be recessed in a polygonal shape.

The vent portion may be recessed in a semicircular shape.

Each of the case and the cap plate may have the same polarity as that of the first electrode, and the terminal plate may have the same polarity as that of the second electrode.

A ratio of a height to a diameter of the button cell may be 1 or less.

According to the embodiments, a button cell that easily discharges a gas generated inside a case, may be provided.

Hence, in summary a button cell is provided that comprises an electrode assembly, a case, a cap plate and a terminal plate, wherein, in order to evacuate cases building within the button cell, the terminal plate comprises with a vent portion.

### BRIEF DESCRIPTION OF THE DRAWINGS

FIG. 1 is a perspective view showing a button cell according to embodiments.
FIG. 2 is a cross-sectional view taken along a line II-II of FIG. 1.
FIG. 3 is an enlarged view of a portion A of FIG. 2.
FIG. 4 is a partial cross-sectional view showing an example of a vent portion of the button cell according to the embodiments.
FIG. 5 is a partial cross-sectional view showing another example of the vent portion of the button cell according to the embodiments.
FIG. 6 is a partial cross-sectional view showing another example of the vent portion of the button cell according to the embodiments.
FIG. 7 is a cross-sectional view for describing an effect of the button cell according to embodiments.

### DETAILED DESCRIPTION

Embodiments of the present disclosure will be described more fully hereinafter with reference to the accompanying drawings so that those skilled in the art easily implement the embodiments. The present disclosure may be modified in various different ways, all without departing from the scope of the present disclosure.

In addition, unless explicitly described to the contrary, the word "comprise" and variations such as "comprises" or "comprising" will be understood to imply the inclusion of stated elements but not the exclusion of any other elements.

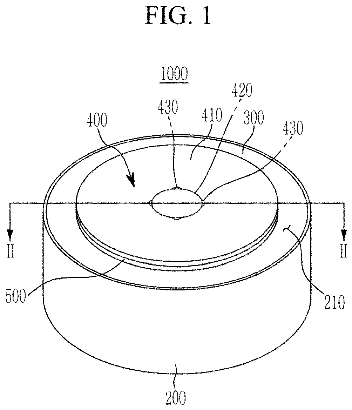

Hereinafter, a button cell according to embodiments will be described with reference to FIGS. 1 to 7.

The button cell according to the embodiments may be an ultra-small rechargeable battery (or an ultra-small secondary battery), and may include a coin cell, but the present disclosure is not limited thereto, and it may include a cylindrical or pin-type cell.

Here, the button cell may be a thin coin-type or button-type cell, and may mean a battery having a ratio (height/diameter) of a height to a diameter of one or less, but the present disclosure is not limited thereto. Because the button cell is mainly cylindrical, a horizontal cross-section may be circular, but the present disclosure is not limited thereto, and a horizontal cross-section may be oval or polygonal. In this case, the diameter may mean a maximum distance of the cell based on a horizontal direction of the cell, and the height may mean a maximum distance (distance from a flat bottom surface thereof to a flat uppermost surface) of the cell based on a vertical direction (i.e., a thickness direction) of the cell. In case the cell is cylindrical, the vertical direction may be a direction parallel to a central axis of the cylindrical shape of the cell.

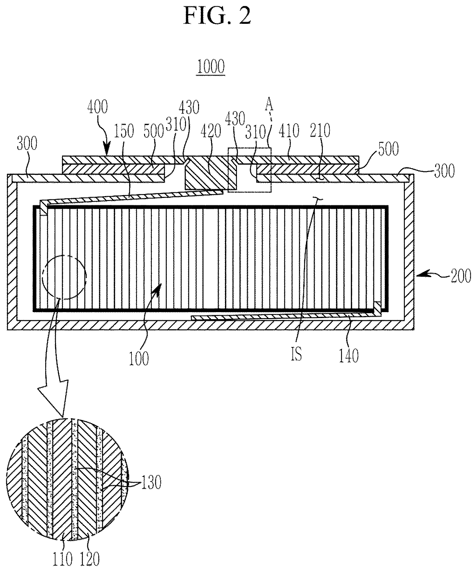

FIG. 1 is a perspective view showing a button cell according to embodiments. FIG. 2 is a cross-sectional view taken along a line II-II of FIG. 1.

Referring to FIG. 1 and FIG. 2, the button cell 1000 according to the embodiments may be a rechargeable battery capable of charging and discharging, and includes an electrode assembly 100, a case 200, a cap plate 300, a terminal plate 400, and a bonding layer 500.

The electrode assembly 100 may be accommodated in an internal space IS of the case 200. A lower portion of the electrode assembly 100 may face a bottom portion of the case 200, and an upper portion of the electrode assembly 100 may face the cap plate 300 covering an opening 210 of the case 200 and the terminal plate 400. The upper and lower portions of the electrode assembly 100 may have planar shapes that are parallel to each other, but the present disclosure is not limited thereto.

The electrode assembly 100 includes a first electrode 110, a second electrode 120, a separator 130, a first electrode tab 140, and a second electrode tab 150.

The first electrode 110 and the second electrode 120 may be spaced apart from each other, and the separator 130 is disposed between the first electrode 110 and the second electrode 120. The separator 130 may include an insulating material. The first electrode 110 may be a negative electrode (i.e., an anode) and the second electrode 120 may be a positive electrode (i.e., a cathode), but the present disclosure is not limited thereto, and the first electrode 110 may be a positive electrode and the second electrode 120 may be a negative electrode.

The first electrode 110 may have a shape of a band extending in one direction, and may include a negative electrode coated region that is a region where a negative electrode active material layer (i.e., an anode active material layer) is coated to a current collector of a metal foil (for example, a Cu foil) and a negative electrode uncoated region that is a region where an active material is not coated. The negative electrode uncoated region may be disposed at one end portion in an extending direction of the first electrode 110.

The second electrode 120 may have a band shape that is spaced apart from the first electrode 110 to extend in one direction with the separator 130 interposed therebetween, and may include a positive electrode coated region that is a region where a positive electrode active material layer (i.e., a cathode active material layer) is coated to a current collector of a metal foil (for example, an AI foil) and a positive electrode uncoated region that is a region where an active material is not coated. The positive electrode uncoated region may be disposed at one end portion in an extending direction of the second electrode 120.

The separator 130 may extend in one direction between the first electrode 110 and the second electrode 120 to prevent a short circuit between the first electrode 110 and the second electrode 120.

The first electrode 110, the separator 130, and the second electrode 120 may be sequentially stacked and wound in a jelly roll shape, but the present disclosure is not limited thereto, and they may be formed in various known shapes. In case the first electrode 110, the separator 130, and the second electrode 120 are wound in a jelly roll shape, and in case the cell 1000 is a cylindrical cell, the first electrode 110, the separator 130, and the second electrode 120 may be wound around the central axis of the cylindrical shape of the cell 1000. Each of the first electrode 110, the second electrode 120, and the separator 130 may include various known materials.

The first electrode tab 140 may extend from the first electrode 110 of the electrode assembly 100 to the case 200. For example, the first electrode tab 140 may integrally extend from the first electrode 110, or may be attached to the first electrode 110 to extend from the first electrode 110. The first electrode tab 140 may be coupled to the bottom portion of the case 200 to connect the first electrode 110 and the case 200. The first electrode tab 140 may contact the first electrode 110 and the case 200. The first electrode tab 140 may be welded to the bottom portion of the case 200, but the present disclosure is not limited thereto, and the first electrode tab 140 may contact the bottom portion of the case 200. By the first electrode tab 140, the case 200 and the cap plate 300 may have the same polarity as that of the first electrode 110.

The second electrode tab 150 may extend from the second electrode 120 of the electrode assembly 100 to the terminal plate 400. For example, the second electrode tab 150 may integrally extend from the second electrode 120, or may be attached to the second electrode 120 to extend from the second electrode 120. The second electrode tab 150 may be coupled to a protruding portion 420 of the terminal plate 400 to connect the second electrode 120 and the terminal plate 400. The second electrode tab 150 may contact the second electrode 120 and the terminal plate 400. The second electrode tab 150 may be welded to a surface of the protruding portion 420 of the terminal plate 400, but the present disclosure is not limited thereto, and the second electrode tab may contact the surface of the protruding portion 420. By the second electrode tab 150, the terminal plate 400 may have the same polarity as that of the second electrode 120.

A center pin penetrating a center of the electrode assembly 100 in a vertical direction may be disposed at a central portion of the electrode assembly 100, and the center pin may support the first electrode tab 140 and the second electrode tab 150, but the present disclosure is not limited thereto.

The case 200 may be connected to the first electrode 110 of the electrode assembly 100 to accommodate the electrode assembly 100 in the internal space IS. The case 200 may include the opening 210 that exposes an upper portion of the electrode assembly 100. Because the bottom portion of the case 200 is welded to the first electrode tab 140 to be connected to the first electrode 110 of the electrode assembly 100, the case 200 may have the same polarity as that of the first electrode 110. The case 200 may have a circular column can shape for accommodating the electrode assembly 100 with a jelly roll shape, but the present disclosure is not limited thereto, and the case 200 may have various known shapes. The case 200 may accommodate various known electrolytes together with the electrode assembly 100. An outer surface of the case 200 and an outer surface of the cap plate 300 may be a first electrode terminal of the button cell 1000, but the present disclosure is not limited thereto. In this case, an upper surface or flange portion 410 that is an outer surface of the terminal plate 400 may be a second electrode terminal of the button cell 1000, but the present disclosure is not limited thereto. A plating layer may be coated at the outer surface of the case 200, but the present disclosure is not limited thereto, and various known coating layers may be coated at the outer surface of the case 200. The case 200 may include stainless steel, but the present disclosure is not limited thereto, and the case may include various known metals.

The opening 210 of the case 200 may be covered by the cap plate 300 and the terminal plate 400.

The cap plate 300 may be coupled to the case 200 to cover an outer region of the opening 210. The cap plate 300 may include a through-hole 310 that exposes a central region of the opening 210. The cap plate 300 may be directly coupled to a side wall of the case 200 in which the opening 210 of the case 200 is formed by a welding process or the like to cover the outer region of the opening 210. The cap plate 300 may have a ring shape by the through-hole 310 formed at a central portion thereof, but the present disclosure is not limited thereto. The cap plate 300 may be coupled to the case 200 to have the same polarity as that of the first electrode 110. Thus, the cap plate 300 and the case 200 may have the same polarity as that of the first electrode 110. The outer surface of the cap plate 300 may be a first electrode terminal of the button cell 1000, but the present disclosure is not limited thereto. The cap plate 300 may be insulated from and bonded to the terminal plate 400 with the bonding layer 500 interposed therebetween. The cap plate 300 may include stainless steel, but the present disclosure is not limited thereto, and the cap plate may include various known metals.

The terminal plate 400 may be connected to the second electrode 120 to be insulated from the cap plate 300 by the bonding layer 500. The insulation may be formed by the bonding layer 500. The terminal plate 400 may cover the through-hole 310 of the cap plate 300. The terminal plate 400 may be disposed above the cap plate 300. The terminal plate 400 may cover the central region of the opening 210 of the case 200 exposed by the through-hole 310 of the cap plate 300. The terminal plate 400 may cover the central region of the opening 210, and the cap plate 300 may cover the outer region of the opening 210 so that the opening 210 of the case 200 is completely covered by the terminal plate 400 and the cap plate 300. The terminal plate 400 may firmly seal the electrode assembly 100 together with the case 200, the cap plate 300, and the bonding layer 500. The terminal plate 400 may be coupled to the second electrode tab 150 of the electrode assembly 100 to be connected to the second electrode 120 of the electrode assembly 100. The terminal plate 400 has the same polarity as that of the second electrode 120.

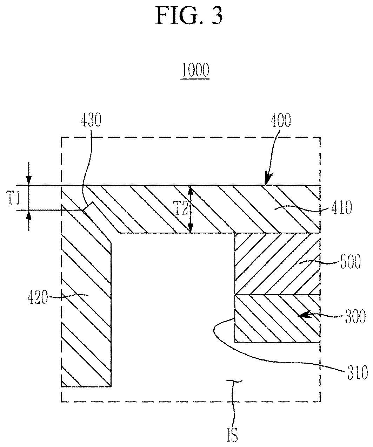

FIG. 3 is an enlarged view of a portion A of FIG. 2.

Referring to FIGS. 1 to 3, the terminal plate 400 may include the upper surface or flange portion 410, the protruding portion 420, and a vent portion 430.

The upper surface or flange portion 410 may be disposed above the cap plate 300, and may overlap the cap plate 300 to cover the through-hole 310. The upper surface or flange portion 410 may have a larger area than that of the protruding portion 420. The upper surface or flange portion 410 may have a larger diameter than that of the protruding portion 420. The upper surface or flange portion 410 may have a thinner thickness than that of the protruding portion 420, but the present disclosure is not limited thereto. A rear surface of the upper surface or flange portion 410 may contact the bonding layer 500, and the upper surface or flange portion 410 may be insulated from the cap plate 300 by the bonding layer 500. A front surface of the upper surface or flange portion 410 may be the second electrode terminal of the button cell 1000. The rear surface of the upper surface or flange portion 410 may be a rear surface of the terminal plate 400.

The protruding portion 420 may be in contact with the upper surface or flange portion 410. For example, the protruding portion 420 may protrude from the upper surface or flange portion 410 to the through-hole 310 at a center of the terminal plate 400 to penetrate the through-hole 310. The protruding portion 420 may be connected to the second electrode 120 through the through-hole 310 from the upper surface or flange portion 410. The surface of the protruding portion 420 may be coupled to the second electrode tab 150. The surface of the protruding portion 420 may be welded to the second electrode tab 150, but the present disclosure is not limited thereto. Because the protruding portion 420 is coupled to the second electrode tab 150, the protruding portion 420 and the upper surface or flange portion 410 of the terminal plate 400 may have the same polarity as that of the second electrode 120. The surface of the protruding portion 420 coupled to the second electrode tab 150 may have a smaller diameter than that of the front surface of the upper surface or flange portion 410 that may be an electrode terminal. The protruding portion 420, the upper surface or flange portion 410, and the vent portion 430 may be integrally formed, e.g. using a forging process or the like, but the present disclosure is not limited thereto, and different materials may be combined to provide the terminal plate 400.

The vent portion 430 may be disposed recessed from the rear surface of the terminal plate 400 facing the through-hole 310. The vent portion 430 may serve as a path discharging a gas generated inside the case 200 to the outside. The vent portion 430 may be disposed between the upper surface or flange portion 410 and the protruding portion 420 on the rear surface of the upper surface or flange portion 410 that is the rear surface of the terminal plate 400. The vent portion 430 may include a portion recessed from the rear surface of the upper surface or flange portion 410. A first thickness T1 of the vent portion 430 may be less than a second thickness T2 of the upper surface or flange portion 410 that is a thickness of the terminal plate 400. Here, the first thickness T1 of the vent portion 430 may include a remaining thickness of a portion of the upper surface or flange portion 410 where the vent portion 430 is disposed, but the present disclosure is not limited thereto. Additionally, the second thickness T2 of the flange portion 410 may include a thickness of another portion of the upper surface or flange portion 410 spaced apart from the vent portion 430, but the present disclosure is not limited thereto.

For example, the first thickness T1 of the vent portion 430 may be 30% to 70% and for example at least 30 %, up to 40 %, up to 50 %, up to 60 % or up to 70 % of the second thickness T2 of the upper surface or flange portion 410 that is the thickness of the terminal plate 400, but the present disclosure is not limited thereto. If the first thickness T1 of the vent portion 430 is less than 30% of the second thickness T2 of the upper surface or flange portion 410, the vent portion 430 may be penetrated by external interference rather than a pressure of a gas generated in the internal space IS of the case 200. If the first thickness T1 of the vent portion 430 is greater than 70% of the second thickness T2 of the upper surface or flange portion 410, the vent portion 430 may not be penetrated by the pressure of the gas generated in the internal space IS of the case 200, and the button cell 1000 may explode.

The vent portion 430 may include a plurality of vent portions (e.g. a plurality of vent parts) 430, and the plurality of vent portions 430 may be spaced apart from each other on the rear surface of the upper surface or flange portion 410 along an edge of the protruding portion 420. For example, the plurality of vent portions 430 may be spaced apart from each other in or along a circular shape on the rear surface of the upper surface or flange portion 410, e.g. along a circular edge of the protruding portion 420 protruding in a circular column shape, but the present disclosure is not limited thereto. In embodiments, the number of the plurality of vent portions 430 is four, but the present disclosure is not limited thereto, and in other embodiments, the number of the plurality of vent portions 430 may be two, three, or five or more. In other embodiments, the button cell 1000 may be provided merely with a single vent portion 430 or a single vent part.

The vent portion 430 may not overlap the bonding layer 500 in a vertical direction that can be a thickness direction of the button cell 1000, and the bonding layer 500 may expose the vent portion 430 in the thickness direction of the button cell 1000. The vent portion 430 may directly face or a recess forming the venti portion 430 may open into the internal space IS of the case 200, e.g. through the through-hole 310 of the cap plate 300. The vent portion 430 may extend through at least a port of the bonding layer 500 or completely through the bonding layer 500.

For example, if a gas is generated in the internal space IS of the case 200 due to a short circuit or the like of electrodes of the electrode assembly 100 disposed in the internal space IS of the case 200, the vent portion 430 having a thickness less than that of the upper surface or flange portion 410 may be penetrated by a pressure of the gas, and the gas in the internal space IS of the case 200 may be discharged to the outside through the through-hole 310 of the cap plate 300 and the penetrated vent portion 430 so that explosion of the button cell 1000 is prevented.

For example, the vent portion 430 may be recessed in a linear shape, and the vent portion 430 may extend from or open away from the rear surface of the upper surface or flange portion 410 that is the rear surface of the terminal plate 400 toward the center of the terminal plate 400. The vent portion 430 may be recessed in the linear shape extending at an acute angle from the rear surface of the flange portion 410 to a center of a front surface of the terminal plate 400 between the upper surface or flange portion 410 and the protruding portion 420. The acute angle may be an angle between the recess forming the vent portion 430 and the upper surface or flange portion 410, or an angle between the recess forming the vent portion 430 and the vertical direction and/or the protruding portion 420.

The vent portion 430 may be recessed into various shapes.

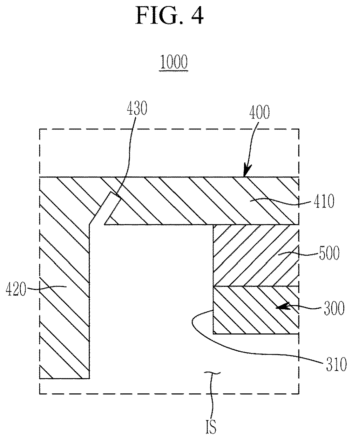

FIG. 4 is a partial cross-sectional view showing an example of the vent portion of the button cell according to the embodiments.

Referring to FIG. 4, for example, the vent portion 430 may be recessed in a linear shape, and the vent portion 430 may extend from the rear surface of the upper surface or flange portion 410 that is the rear surface of the terminal plate 400 toward an edge of the terminal plate 400. The vent portion 430 may be recessed in the linear shape extending at an obtuse angle from the rear surface of the upper surface or flange portion 410 to a center of a front surface of the terminal plate 400 between the upper surface or flange portion 410 and the protruding portion 420. The obtuse angle may be an angle between the recess forming the vent portion 430 and the upper surface or flange portion 410, or an angle between the recess forming the vent portion 430 and the vertical direction and/or the protruding portion 420.

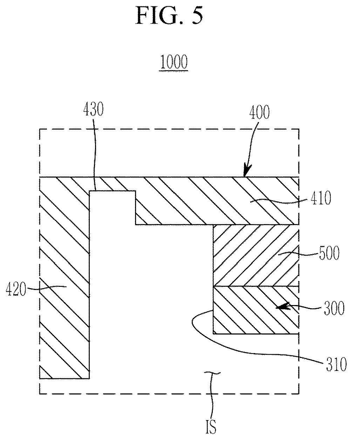

FIG. 5 is a partial cross-sectional view showing another example of the vent portion of the button cell according to the embodiments.

Referring to FIG. 5, as another example, the vent portion 430 may be recessed in a polygonal shape, and the vent portion 430 may be recessed in the polygonal shape from the rear surface of the upper surface or flange portion 410 that is the rear surface of the terminal plate 400 toward a front surface of the terminal plate 400. The vent portion 430 may be recessed in a quadrangular shape from the rear surface of the flange portion 410 that is the rear surface of the terminal plate 400, but the present disclosure is not limited thereto, and the vent portion may be recessed in the polygonal shape such as a triangular shape, a pentagonal shape, a hexagonal shape, a heptangular shape, an octagonal shape, or the like.

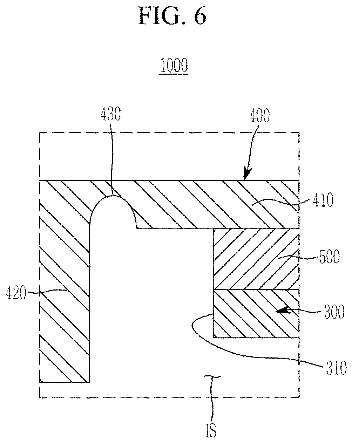

FIG. 6 is a partial cross-sectional view showing another example of the vent portion of the button cell according to the embodiments.

Referring to FIG. 6, as another example, the vent portion 430 may be recessed in a semicircular shape, and the vent portion 430 may be recessed in at least a section of a semicircular shape from the rear surface of the upper surface or flange portion 410 that is the rear surface of the terminal plate 400 toward a front surface of the terminal plate 400. The vent portion 430 may be recessed at least partly in the semicircular shape from the rear surface of the upper surface or flange portion 410 that is the rear surface of the terminal plate 400, but the present disclosure is not limited thereto, and the vent portion may be recessed in a shape such as a circular shape, an oval shape, a loop shape, or the like.

Referring to FIGS. 1 to 3, a plating layer may be coated on an outer surface of the terminal plate 400, but the present disclosure is not limited thereto, and various known coating layers may be coated on the outer surface of the terminal plate 400. The terminal plate 400 may include aluminum, but the present disclosure is not limited thereto, and the terminal plate may include various known metals.

In other embodiments, the terminal plate 400 may have a circular flat plate shape, and the terminal plate 400 may include only the vent portion 430.

The bonding layer 500 may be disposed between the cap plate 300 and the upper surface or flange portion 410 of the terminal plate 400. The bonding layer 500 may insulate between the cap plate 300 and the terminal plate 400. The bonding layer 500 may include an insulating material, and/or may bond between the cap plate 300 and the terminal plate 400. The bonding layer 500 may be thermally fused between the cap plate 300 and the upper surface or flange portion 410 of the terminal plate 400 using heat, a laser beam, or the like. The bonding layer 500 may include a polypropylene resin, but the present disclosure is not limited thereto, and the bonding layer may include various known resins that insulate and bond between the cap plate 300 and the terminal plate 400. Because the bonding layer 500 located between the cap plate 300 and the terminal plate 400, insulates the cap plate 300 from the terminal plate 400, and bonds the cap plate 300 to the terminal plate 400, the opening 210 of the case 200 in which the electrode assembly 100 is accommodated may be completely sealed by the cap plate 300, the terminal plate 400, and the bonding layer 500.

The bonding layer 500 may not overlap the vent portion 430 in a vertical direction that is a thickness direction of the button cell 1000. The bonding layer 500 may expose the vent portion 430 toward the through-hole 310 of the cap plate 300.

For example, the bonding layer 500 may include a thermosetting resin and a thermoplastic resin. The thermosetting resin and the thermoplastic resin of the bonding layer 500 may be stacked in a plurality of layers, but the present disclosure is not limited thereto. The thermosetting resin of the bonding layer 500 may be cured by heat, and may include various known thermosetting resins such as a phenol resin, a urea resin, a melamine resin, an epoxy resin, a polyester resin, and the like. The thermoplastic resin of the bonding layer 500 may include a polypropylene resin that melts at a set temperature, but the present disclosure is not limited thereto, and the thermoplastic resin of the bonding layer 500 may include various known thermoplastic resins such as a polystyrene resin, a polyethylene resin, a polyvinyl chloride resin, and the like.

The bonding layer 500 may be completely covered in a horizontal direction or in the vertical direction that is the thickness direction of the button cell 1000 by the terminal plate 400 between the cap plate 300 and the terminal plate 400, but the present disclosure is not limited thereto, and the bonding layer 500 may protrude in the horizontal direction that is a diameter direction of the button cell 1000 from an edge of the terminal plate 400 between the cap plate 300 and the terminal plate 400.

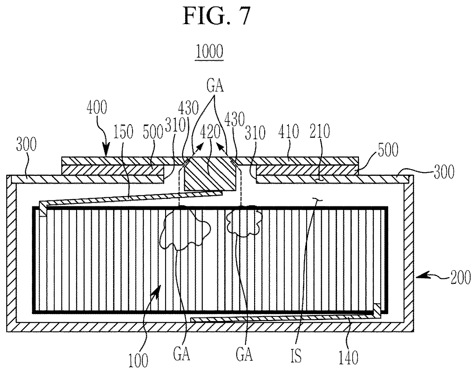

FIG. 7 is a cross-sectional view for describing an effect of the button cell according to embodiments.

Referring to FIG. 7, for example, a gas GA may be generated in the internal space IS of the case 200 due to a short circuit or the like of electrodes of the electrode assembly 100 disposed in the internal space IS of the case 200 of the button cell 1000. The vent portion 430 may be recessed from the rear surface of the upper surface or flange portion 410 of the terminal plate 400 by a pressure of the gas GA generated in the internal space IS of the case 200 so that the vent portion 430 having a thinner thickness than that of the upper surface or flange portion 410 is penetrated. The gas GA in the internal space IS of the case 200 may be guided by the protruding portion 420 of the terminal plate 400, may pass through the through-hole 310 of the cap plate 300, and may be discharged to the outside of the terminal plate 400 through the vent portion 430.

The vent portion 430 may first be penetrated by the pressure of the gas GA in the internal space IS of the case 200, so that the gas GA in the internal space IS of the case 200 is discharged to the outside through the vent portion 430. Thus, explosion of the button cell 1000 may be prevented.

The button cell 1000 may include the terminal plate 400 including the vent portion 430, so that the button cell 1000 in which the gas GA generated inside the case 200 is easily discharged to prevent the explosion thereof is provided.

A compound (i.e., a lithiated intercalation compound) capable of reversible intercalation and deintercalation of lithium may be used as the positive electrode active material. For example, one or more types of composite oxides of a metal selected from cobalt, manganese, nickel, and a combination thereof and lithium may be used as the positive electrode active material.

The composite oxide may be lithium transition metal composite oxide, and for example, the composite oxide may include lithium nickel-based oxide, lithium cobalt-based oxide, lithium manganese-based oxide, a lithium iron phosphate-based compound, cobalt-free nickel-manganese-based oxide, or a combination thereof.

As an example, a compound expressed by any one of the following chemical formulas may be used as the positive electrode active material. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0< a<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

The positive electrode for a lithium rechargeable battery may include a current collector and a positive electrode active material layer formed on the current collector. The positive electrode active material layer may include a positive electrode active material, and may further include a binder and/or a conductive material.

A content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

AI may be used as the current collector, but the present disclosure is not limited thereto.

The negative electrode active material may include a material capable of reversible intercalation and deintercalation of a lithium ion, a lithium metal, an alloy of the lithium metal, a material capable of doping and dedoping lithium, or transition metal oxide.

The material capable of reversible intercalation and deintercalation of the lithium ion may include a carbon-based negative electrode active material (for example, crystalline carbon, amorphous carbon, or a combination thereof). An example of the crystalline carbon may include graphite such as natural graphite or artificial graphite, and an example of the amorphous carbon may include soft carbon, hard carbon, mesophase pitch carbide, fired cokes, or the like.

A Si-based negative electrode active material or a Sn-based negative electrode active material may be used as the material capable of doping and dedoping lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to embodiments, the silicon-carbon composite may have a shape in which the amorphous carbon is coated on a surface of a silicon particle.

The silicon-carbon composite may further include crystalline carbon. For example, the silicon-carbon composite may include a core including the crystalline carbon and a silicon particle and an amorphous carbon coating layer disposed on a surface of the core.

The negative electrode for the lithium rechargeable battery may include a current collector and a negative electrode active material layer formed on the current collector. The negative electrode active material layer may include a negative electrode active material, and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

A non-aqueous binder, an aqueous binder, a dry binder, or a combination thereof may be used as the binder. If the aqueous binder is used as the binder, it may further include a cellulose-based compound capable of imparting viscosity.

The current collector of the negative electrode may be selected from a copper foil, a nickel foil, a stainless steel foil, a titanium foil, a nickel foam, a copper foam, a polymer substrate coated with a conductive metal, and a combination thereof.

An electrolyte for the lithium rechargeable battery may include may include a non-aqueous organic solvent and a lithium salt.

The non-aqueous organic solvent may serve as a medium through which ions involved in an electrochemical reaction of the battery may move.

The non-aqueous organic solvent may be a carbonate-based solvent, an ester-based solvent, an ether-based solvent, a ketone-based solvent, an alcohol-based solvent, an aprotic solvent, or a combination thereof, and may be used alone or in combination of two or more types.

If the carbonate-based solvent is used, a mixture of cyclic carbonate and linear carbonate may be used.

Depending on a type of the lithium rechargeable battery, the separator may exist between the positive and negative electrodes. Polyethylene, polypropylene, polyvinylidene fluoride, or a multilayer film with two or more layers thereof may be used as the separator.

The separator may include a porous substrate and a coating layer including an organic material, an inorganic material, or a combination thereof disposed on one surface or both surfaces of the porous substrate.

The organic material may include a polyvinylidenefluoride-based polymer or a (metha)acryl-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and the inorganic material may be mixed in one coating layer, or a coating layer including the organic material and a coating layer including the inorganic material may be stacked.

While this disclosure has been described in connection with what is presently considered to be practical embodiments, it is to be understood that the disclosure is not limited to the disclosed embodiments, but, on the contrary, is intended to cover various modifications included within the scope of the appended claims.

### Reference numerals

- 100: electrode assembly
- 110: first electrode
- 120: second electrode
- 130: separator
- 140: first electrode tab
- 150: second electrode tab
- 200: case
- 210: opening
- 300: cap plate
- 310: through hole
- 400: terminal plate
- 410: upper surface portion / flange portion
- 420: protruding portion
- 430: vent portion
- 500: bonding layer
- 1000: button cell
- is: internal space

## Claims

1. A button cell (1000) comprising:
an electrode assembly (100) that includes a first electrode (110), a second electrode (120), and a separator (130) disposed between the first electrode (110) and the second electrode (120);
a case (200) that is connected to the first electrode (110), that accommodates the electrode assembly (100) and that includes an opening (210) exposing the electrode assembly (100);
a cap plate (300) that is coupled to the case (200) to cover an outer region of the opening (210) and includes a through-hole (310) exposing a central region of the opening (210); and
a terminal plate (400) that is connected to the second electrode (120), that insulates terminal plate (400) from the cap plate (300) and that covers the through-hole (310),
wherein the terminal plate (400) includes a vent portion (430) recessed into a rear surface of the terminal plate (400), the rear surface facing the through-hole (310).

2. The button cell (1000) as claimed in claim 1, wherein the terminal plate (400) further comprises:
a flange portion (410) that covers the through-hole (310); and
a protruding portion (420) that is connected to the flange portion (410).

3. The button cell (1000) as claimed in claim 2, wherein the vent portion (430) is disposed between the flange portion (410) and the protruding portion (420) and/or wherein the vent portion (430) is recessed into a rear surface of the flange portion (410).

4. The button cell (1000) as claimed in claim 3, wherein the vent portion (430) comprises a plurality of vent parts.

5. The button cell (1000) as claimed in claim 4, wherein the plurality of vent parts are spaced apart from one another on the rear surface of the flange portion (410) along an edge of the protruding portion (420).

6. The button cell (1000) as claimed in any of claims 2 to 5, wherein the electrode assembly (100) further comprises:
a first electrode tab (140) that extends from the first electrode (110) and is welded to the case (200); and
a second electrode tab (150) that extends from the second electrode (120) and is welded to the protruding portion (420) of the terminal plate (400).

7. The button cell (1000) as claimed in any of claims 2 to 6, further comprising a bonding layer (500) that is disposed between the cap plate (300) and the flange portion (410) of the terminal plate (400) and insulates the cap plate (300) from and bonds the cape plate (300) to the flange portion (410).

8. The button cell (1000) as claimed in claim 7, wherein the vent portion (430) does not overlap the bonding layer (500) in a thickness direction of the button cell (1000) or wherein the bonding layer (500) exposes the vent portion (430).

9. The button cell (1000) as claimed in any of claims 1 to 8, wherein a thickness of the vent portion (430) is less than that of the terminal plate (400).

10. The button cell (1000) as claimed in claim 9, wherein a thickness of the vent portion (430) is 30% to 70% of a thickness of the terminal plate (400).

11. The button cell (1000) as claimed in any of claims 1 to 10, wherein the vent portion (430) directly faces an internal space (IS) of the case (200) through the through-hole (310).

12. The button cell (1000) as claimed in any of claims 1 to 11, wherein the vent portion (430) is recessed in a linear shape.

13. The button cell (1000) as claimed in claim 12, wherein the vent portion (430) extends from the rear surface of the terminal plate (400) toward a center of the terminal plate (400) or wherein the vent portion (430) extends from the rear surface of the terminal plate (400) toward an edge of the terminal plate (400).

14. The button cell (1000) as claimed in any of claims 1 to 13, wherein the vent portion (430) is recessed in a polygonal shape or wherein the vent portion (430) is recessed in a semicircular shape.

15. The button cell (1000) as claimed in any of claims 1 to 14, wherein each of the case (200) and the cap plate (300) has the same polarity as that of the first electrode (110), and the terminal plate (400) has the same polarity as that of the second electrode (120).
